# EUROPÄISCHE PATENTSCHRIFT

(11) **EP 3 967 888 B1**
(45) Veröffentlichungstag und Bekanntmachung des Hinweises auf die Patenterteilung: **02.11.2022**
(21) Anmeldenummer: 20195912.9
(22) Anmeldetag: 14.09.2020
(51) Int. Cl.: F16B 5/12, F16B 35/06, F16B 37/14, F16B 23/00, B60R 16/02, H02G 3/32, B25B 33/00

(54) **BEFESTIGUNGSVORRICHTUNG**
FIXING DEVICE
DISPOSITIF DE FIXATION

(43) Veröffentlichungstag der Anmeldung: 16.03.2022
(73) Patentinhaber: Koninklijke Nedschroef Holding B.V., 5707 LC Helmond (NL)
(72) Erfinder: Liebregts, Dean, 5552 CM Valkenswaard (NL); Peters, Albertus Mathijs, 6591 MG Gennep (NL)
(74) Vertreter: Patentanwälte Dörner & Kötter PartG mbB

(56) Entgegenhaltungen:
- EP-A1- 3 166 191
- EP-A2- 1 772 935
- WO-A1-2019/141843
- DE-B3-102015 121 271
- US-A1- 2019 257 349
- US-B1- 6 672 547

## Beschreibung

Die Erfindung betrifft eine Befestigungsvorrichtung, umfassend eine Schraube mit einem ein Gewinde aufweisenden Schaft und einen an den Schaft angeformten Kopf sowie ein mit dem Kopf formschlüssig verbindbares Halteelement.

Befestigungsvorrichtungen zum Halten von Kabeln, Schläuchen oder Rohrleitungen sind in unterschiedlichen Ausführungen bekannt. Diese sind typischerweise derart ausgebildet, dass sie eine Befestigung für ein Kabel oder ein beliebiges längliches Element wie z.B. ein Rohr oder ein Schlauch an einer Tragstruktur halten. Oftmals ist die Befestigungsanordnung zur Anbringung einer Vielzahl von Kabeln oder Schläuchen konfiguriert. Dabei sind die Befestigungsvorrichtungen derart ausgebildet, dass sie eine Anordnung der Kabel oder Leitungen derart ermöglichen, dass diese den Betrieb der entsprechenden Anwendung nicht beeinträchtigen. In der EP 1 772 935 A2 ist eine Halteranordnung für Kabel beschrieben, die aus einem Basisteil und einem in dieses Basisteil einführbaren, ein Kabel haltenden Stückverbinder gebildet ist. Dabei ist der Steckverbinder in dem Basisteil verdrehbar und in einer wählbaren Dreh-Rastposition fixierbar. In der WO 2019/141843 A1 ist weiterhin eine Halteranordnung beschrieben, die aus einer mit einer Außenverzahnung versehenen, auf eine Schraube aufsteckbaren Scheibe und einem mit einer korrespondierenden Innenverzahnung versehenen Halter gebildet ist. Dabei ist der Halter mit einer Rastnase versehen, die in eine in die Außenverzahnung der Scheibe eingebrachte radial umlaufende Nut einbringbar ist, wodurch der Halter axial auf der Scheibe fixierbar ist.

Nachteilig an den vorbekannten Befestigungsvorrichtungen ist, dass die der Kopf der Schraube nach Fixierung des Halters nicht mehr für ein Drehwerkzeug zugänglich ist, wodurch ein ggf. erforderliches Nachziehen der Schraubenverbindung erschwert ist. Darüber hinaus ist die Drehposition des Halters nach dessen Fixierung nicht mehr justierbar. Eine einmal positionierte Verlegungsanordnung eines Kabel- bzw. Leitungsstrangs ist daher nur unter größerem Aufwand zu ändern.

Hier will die Erfindung Abhilfe schaffen. Der Erfindung liegt die Aufgabe zugrunde, eine Befestigungsvorrichtung, insbesondere für Kabel oder Leitungen bereitzustellen, bei der ein Nachziehen der Schraubenverbindung auch bei fixiertem Halter ermöglicht ist. Gemäß der Erfindung wird diese Aufgabe durch eine Befestigungsvorrichtung mit den Merkmalen des kennzeichnenden Teils der Patentansprüche 1 oder 7 gelöst.

Mit der Erfindung ist eine Befestigungsvorrichtung, insbesondere für Kabel oder Leitungen bereitgestellt, bei der ein Nachziehen der Schraubenverbindung auch bei fixiertem Halter ermöglicht ist. Dadurch, dass der Kopf mit einer Verzahnung versehen ist, die mit einer an dem Halteelement vorhandenen Verzahnung derart korrespondiert, dass eine Drehmomentübertragung von dem Halteelement auf den Schraubenkopf ermöglicht ist, dient das Halteelement zugleich als Drehwerkzeug, über das ein Nachziehen der Schraubenverbindung jederzeit ermöglicht ist. Das Festziehen der Schraubenverbindung kann über ein Werkzeug erfolgen, das eine entsprechend dem Halter ausgestaltete Verzahnung aufweist.

In Weiterbildung der Erfindung sind Mittel zur lösbaren Fixierung der im Eingriff befindlichen Verzahnungen von Kopf und Halteelement angeordnet. Hierdurch können diese jederzeit temporär außer Eingriff gebracht und in veränderter Drehstellung wieder in Eingriff gebracht werden, wodurch eine einfache Justierung ermöglicht ist.

Gemäß der ersten alternativen Lösung weist der Kopf einen Zylinderkörper auf, der radial umlaufend mit einer Außenverzahnung versehen ist, die sich in Axialrichtung über einen Teilbereich des Zylinderkörpers erstreckt, wobei das Halteelement einen Durchbruch aufweist, mit dem es auf den mit der Außenverzahnung versehenen Abschnitt des Kopfes unaufschiebbar ist, wobei in dem Durchbruch eine Innenverzahnung angeordnet ist, die mit der Außenkontur der Außenverzahnung des Kopfes korrespondiert, wobei an dem Halteelement wenigstens eine Federzunge angeordnet ist, die im montierten Zustand des Halteelements, bei dem Innenverzahnung und Außenverzahnung im Eingriff sind, wenigstens einen Zahn der Außenverzahnung des Kopfes der Schraube hintergreift. Hierdurch ist eine temporäre axiale Fixierung des Halteelements erzielt. Bevorzugt ist die wenigstens eine Federzunge derart elastisch ausgebildet, dass diese reversible temporär nach außen verbogen werden kann, wodurch die axiale Fixierung aufgehoben ist und das Halteelement von dem Kopf der Schraube abgezogen werden kann. Besonders bevorzugt erstreckt sich die wenigstens eine Federzunge fluchtend mit jeweils einem durch zwei Zähne der Innenverzahnung begrenzten Zwischenraum.

In weiterer Ausgestaltung der Erfindung sind die Zähne der Außenverzahnung des Kopfes weitgehend quaderförmig ausgebildet, wobei die Zähne der Innenverzahnung des Halteelements vorzugsweise ebenfalls weitgehend quaderförmig ausgebildet sind. Die weitgehend quaderförmige Ausgestaltung ist genau genommen aufgrund der radialen Anordnung der Zähne eine Pyramidenform mit trapezförmiger Grundfläche.

In weiterer Ausgestaltung der Erfindung entspricht die Innenkontur des Durchbruchs des Halteelements im Wesentlichen der Außenkontur der Außenverzahnung des Kopfes, auf den diese aufschiebbar ist. Hierdurch ist eine weitgehend spielfreie Anordnung des Halteelements auf dem Kopf der Schraube erzielt.

In Weiterbildung der Erfindung ist ein Federelement angeordnet, über das das Halteelement mit seinen Federzungen in definierten ersten Drehstellungen gegen die jeweiligen Zähne vorgespannt ist. Hierdurch ist eine zuverlässige Fixierung des Halteelements auf dem Kopf der Schraube bewirkt. Einer ungewollten axialen Verschiebung des Halteelements entlang des Kopfes ist entgegengewirkt.

Gemäß der zweiten alternativen Lösung ist in den Schraubenkopf zentrisch ein Eingriff eingebracht, der eine Innenverzahnung aufweist, wobei das Halteelement wenigstens bereichsweise eine Außenverzahnung aufweist, die mit der Innenverzahnung des Kopfes korrespondiert, wobei die Innenverzahnung durch wenigstens zwei separate Verzahnungsabschnitte gebildet ist, die über einen angeordneten Hebel radial bewegbar sind. Hierdurch ist eine formschlüssige Verbindung zwischen dem Halteelement und dem Schraubenkopf erzielt, die durch radiale Bewegung der Verzahnungsabschnitte lösbar ist. Durch die radiale Bewegung der Verzahnungsabschnitte können diese außer Eingriff mit der Innenverzahnung des Kopfes gebracht werden, wodurch die formschlüssige Verbindung gelöst ist. Bevorzugt sind zwischen den Zähnen der Innenverzahnung des Kopfes weitgehend quaderförmige Zwischenräume gebildet, wobei die Zähne der Außenverzahnung des Halteelements eine weitgehend quaderförmige Kontur aufweisen, die mit den Zwischenräumen der Innenverzahnung des Kopfes korrespondiert.

In Weiterbildung der Erfindung ist das Halteelement hohlzylindrisch ausgebildet und weist einen Innendurchmesser auf, der im Wesentlichen dem Außendurchmesser des Schraubenkopfes entspricht. Hierdurch ist eine umlaufende Führung des Halteelements an dem Schraubenkopf erzielt.

In Ausgestaltung der Erfindung ist die Außenverzahnung durch zwei Verzahnungsabschnitte gebildet, die jeweils an einem elastischen Halter angeformt sind, der an der Innenwandung des Halteelements befestigt ist. Hierdurch sind die Verzahnungsabschnitte über den elastischen Halter temporär verschwenkbar, sodass sie außer Eingriff sowie über die Rückstellkräfte wieder in Eingriff mit der Innenverzahnung des Kopfes verbracht werden können.

In weiterer Ausgestaltung der Erfindung sind die beiden elastischen Halter diametral gegenüberliegend angeordnet und jeweils mit einem Hebel verbunden, der durch ein jeweils ein in dem Halteelement eingebrachtes Fenster nach außen geführt ist. Hierdurch ist eine einfache Manipulation der Verzahnungsabschnitte durch Gegeneinanderdrücken der Hebel erzielbar, wodurch die Verzahnungsabschnitte außer Eingriff mit der Innenverzahnung des Kopfes bringbar sind.

In Weiterbildung der Erfindung sind an dem Halteelement axiale Federlaschen angeformt, die jeweils einen radial nach innen ragenden Rastkörper aufweisen, der im montierten Zustand den Kopf der Schraube hintergreift. Hierdurch ist eine axiale Fixierung des Halteelements an dem Schraubenkopf bewirkt.

In weiterer Ausgestaltung der Erfindung ist an dem Halteelement wenigstens eine Aufnahmevorrichtung zur Befestigung von Kabeln oder Rohren angeordnet. Dabei kann die Aufnahmevorrichtung sowohl an das Halteelement angeformt sein, als auch über eine Rast-, Press- oder Klebeverbindung mit dem Halteelement verbunden sein. Eine zweiteilige Ausführung des Halteelements, bei dem die Aufnahmevorrichtung bedarfsgerecht an dem Halteelement befestigbar ist, bietet den Vorteil, dass je nach Einsatzgebiet eine passende Aufnahmevorrichtung an dem Halteelement angebracht werden kann, wodurch die Flexibilität der Befestigungsvorrichtung erhöht ist.

Andere Weiterbildungen und Ausgestaltungen der Erfindung sind in den übrigen Unteransprüchen angegeben. Ausführungsbeispiele der Erfindung sind in den Zeichnungen angegeben und werden nachfolgend im Einzelnen beschrieben. Es zeigen:
- Figur 1: die schematische Darstellung einer Befestigungsvorrichtung;
- Figur 2: die Befestigungsvorrichtung aus Figur 1 in Explosionsdarstellung;

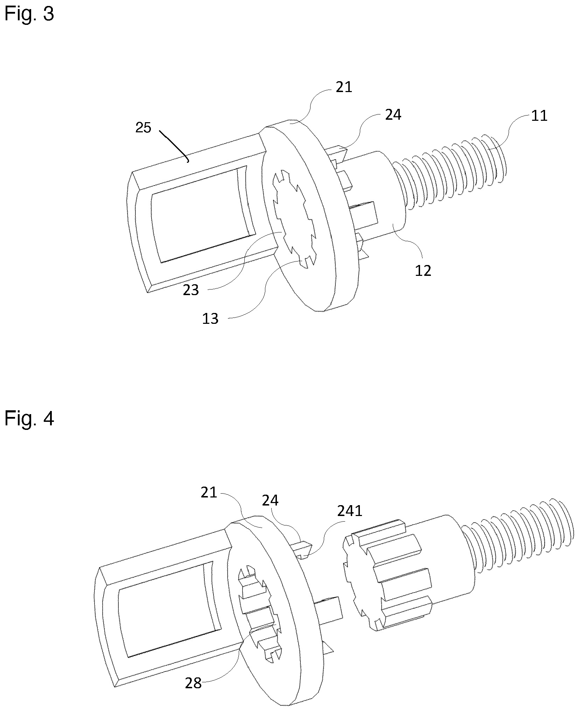

- Figur 3: die schematische Darstellung der Befestigungsvorrichtung aus Figur 1 ohne Federelement;
- Figur 4: die Darstellung der Anordnung aus Figur 3 in Explosionsdarstellung;
- Figur 5: die schematische Darstellung einer Befestigungsvorrichtung in einer weiteren Ausführungsform und
- Figur 6: die schematische Darstellung des Halteelements der Befestigungsvorrichtung aus Figur 5.

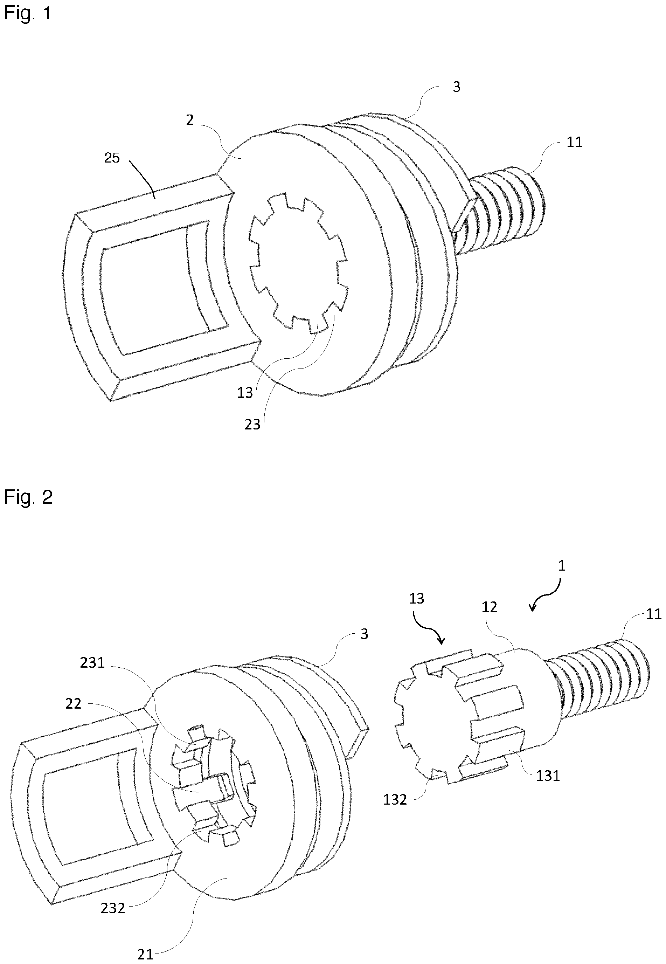

Die als Ausführungsbeispiel gewählte Befestigungsvorrichtung gemäß Figur 1 besteht im Wesentlichen aus einer Schraube 1, die ein Halteelement 2 aufnimmt, an dem eine Schraubenfeder 3 anliegt.

Die Schraube 1 besteht im Wesentlichen aus einem mit einem metrischen Gewinde versehenen Schaft 11, an den ein zylindrischer Kopf 12 angeformt ist, der umlaufend mit einer Außenverzahnung 13 versehen ist. Die Zähne 131 der Außenverzahnung 13 sind weitgehend quaderförmig ausgebildet und erstrecken sich von dem freien Ende des Kopfes 12 bis etwa zu dessen Mitte. Durch die Ausgestaltung der Zähne 131 sind auch die Zwischenräume 132 zwischen den Zähnen 131 weitgehend quaderförmig ausgebildet.

Das Halteelement 2 umfasst einen kreisscheibenförmigen Grundkörper 21, in den zentrisch ein Durchbruch 22 eingebracht ist, der mit einer Innenverzahnung 23 versehen ist. Die Zähne 231 der Innenverzahnung 23 sind korrespondierend zu den Zwischenräumen 132 der Außenverzahnung 13 der Schraube 1 weitgehend quaderförmig ausgebildet und begrenzen wiederum im Wesentlichen quaderförmig ausgebildete Zwischenräume 232. Diametral gegenüberliegend sind an den Grundkörper 21 in Flucht mit jeweils einem Zwischenraum 232 der Innenverzahnung 23 zwei axial sich erstreckende Federzungen 24 angeordnet, die an ihrem freien Ende einen radial auskragenden Raststeg 241 aufweisen. Das Halteelement 2 ist im Ausführungsbeispiel als Kunststoffspritzgussteil ausgebildet, wobei die Schraubenfeder 3, die die Federzungen 24 einrahmend an dem Grundkörper 21 anliegt, an diesen angespritzt ist. An dem Halteelement 2 ist eine Aufnahme 25 zur Befestigung von Kabeln angeformt, die im Ausführungsbeispiel als Rahmen zur Durchführung von Kabelbindern ausgebildet ist. Alternativ kann eine solche Aufnahmevorrichtung auch rinnenförmig ausgebildet und zur Durchführung von Kabelbindern mit Bohrungen versehen sein, wie dies in der WO 2019/141843 A1 gezeigt ist.

Zur Befestigung eines Kabelstrangs wird die Schraube 1 mit ihrem ein Gewinde aufweisenden Schaft 11 über das Halteelement 2 in eine Tragstruktur beispielsweise eines Kraftfahrzeugs eingeschraubt. Nachfolgend wird das Halteelement 2 derart mit seiner Innenverzahnung 23 auf die Außenverzahnung 13 des Kopfes 12 der Schraube 1 positioniert, dass die an dem Grundkörper 21 des Halteelements 2 angeordnete Aufnahme 25 in etwa ausgerichtet ist und die Schraubenfeder 3 an der - nicht gezeigten - Tragstruktur anliegt. Sodann wird das Halteelement 2 weiter entgegen der Vorspannrichtung der Schraubenfeder 3 bewegt, bis die Raststege 241 der elastisch ausgebildeten Federzungen 24 jeweils einem Zahn 131 des Kopfes 12 der Schraube 1 rastend hintergreifen.

Das Halteelement ist so in der gewählten Drehposition an der Schraube 2 fixiert.

Zur Nachjustierung des Halteelements 2 kann dieses nun weiter entgegen der Vorspannkraft der Schraubenfeder 3 entlang des zylindrischen Kopfes 12 der Schraube 1 bewegt werden, bis die Innenverzahnung des Halteelements 2 außer Eingriff mit der Außenverzahnung 13 der Schraube 1 ist. Das Halteelement 2 kann sodann in die gewünschte Drehstellung verbracht werden, wonach der Grundkörper 21 durch die Vorspannkraft der Schraubenfeder 3 mit seiner Innenverzahnung 23 wieder in Eingriff mit der Außenverzahnung 13 der Schraube 1 verbracht wird und soweit axial bewegt wird, bis die Raststege 241 der Federzungen 24 jeweils an einem Zahn 131 der Außenverzahnung 13 der Schraube 1 anliegen. Das Halteelement 2 ist nun in der justierten Drehstellung an der Schraube 1 fixiert.

Zur Demontage des Halteelements 2 können die elastischen Federzungen 24 reversibel nach außen gebogen werden, sodass diese über die Zähne der Au-βenverzahnung 13 der Schraube 1 gleiten, wodurch das Halteelement 2 von dem Kopf 12 der Schraube 1 abgezogen werden kann.

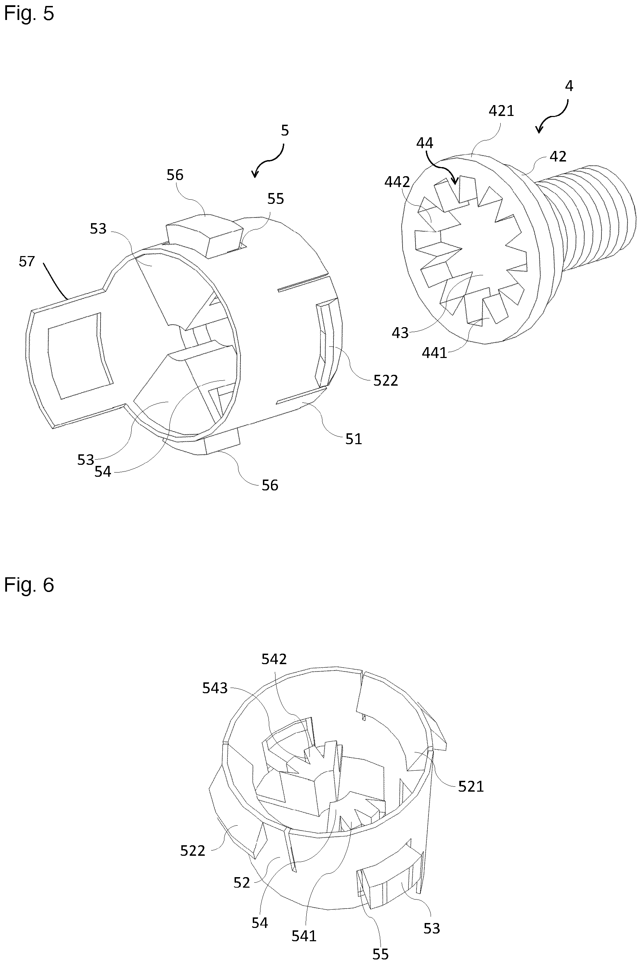

Im Ausführungsbeispiel gemäß Figur 5 ist der Kopf 42 der Schraube 4 zylindrisch ausgebildet und weist außen umlaufend einen ringförmig vorstehenden Kragen 421 auf. Zentrisch ist in den Kopf 42 der Schraube 4 ein Eingriff 43 eingebracht, der eine Innenverzahnung 44 aufweist. Die Zähne 441 der Innenverzahnung 44 sind prismenförmig ausgebildet und weisen eine dreieckige Grundfläche auf. Die Zähne 441 begrenzen jeweils im Wesentlichen quaderförmige Zwischenräume 442. An den Kopf 42 schließt sich wiederum ein mit einem metrischen Gewinde versehener Schaft 41 an.

Das Halteelement 5 weist in diesem Ausführungsbeispiel einen hohlzylinderförmigen Grundkörper 51 auf, in den diametral gegenüberliegend jeweils zwei beabstandet zueinander angeordnete Einschnitte eingebracht sind, durch die Federlaschen 52 gebildet sind. An ihrem freien Ende ist an jede der beiden Federlaschen 52 innen ein Rastkörper 521 sowie außen ein Griffstück 522 angeformt.

An seinem den Rastkörpern 521 gegenüberliegenden Ende sind jeweils um 90° versetzt zu den Federlaschen 52 an den Grundkörper 21 diametral gegenüberliegend zwei Halter 53 angeformt. Die Halter 53 sind kreisscheibenausschnittsförmig ausgebildet. An ihrem innen liegenden, freien Ende ist an den Halter 53 jeweils axial sich in Richtung der Rastkörper 521 erstreckend ein ringabschnittsförmiger Verzahnungsabschnitt 54 angeformt, der mit einer Außenverzahnung 541 zum Eingriff mit der Innenverzahnung 44 des Kopfes 42 der Schraube 4 versehen ist. Die Zähne 542 der Außenverzahnung 541 sind entsprechend weitgehend quaderförmig ausgebildet und begrenzen Zwischenräume 543 mit dreieckförmigem Querschnitt.

Den Verzahnungsabschnitten 54 gegenüberliegend sind in den Grundkörper 51 Fenster 55 eingebracht, durch die jeweils ein Hebel 56 geführt ist, der an den jeweils zugeordneten Verzahnungsabschnitt 54 angeformt ist. Außen ist an dem Grundkörper 51 eine Aufnahme 57 zur Befestigung von Kabeln angeformt, die wiederum in Art eines Rahmens ausgeführt ist. Das so ausgebildete Halteelement 5 ist im Ausführungsbeispiel einstückig als Kunststoffspritzgussteil hergestellt.

Die Schraube 4 der so gestalteten Befestigungsvorrichtung wird wiederum zunächst in eine Tragstruktur beispielsweise eines Kraftfahrzeugs eingeschraubt. Nachfolgend wird das Halteelement 5 über den Kopf 42 der Schraube 4 gestülpt und in der gewünschten Drehstellung auf diesen aufgeschoben, bis die Außenverzahnungen 541 der Verzahnungsabschnitte 54 mit der Innenverzahnung 44 des Kopfes 42 der Schraube 4 im Eingriff sind. Hierbei werden die Federlaschen 52 durch die Rastkörper 521, die entlang der Außenkontur des Kopfes 52 der Schraube 4 gleiten, elastisch nach außen gedrückt, bis die so gegen den Kopf 42 vorgespannten Rastkörper 521 den Kragen 421 des Kopfes 42 hintergreifen. Das Halteelement 5 ist nun axial an dem Kopf 42 der Schraube 4 fixiert.

Zur nachträglichen Justierung des Halteelements 5 werden die durch die Fenster 55 des Grundkörpers 51 nach außen ragenden Hebel 56 gegeneinandergepresst, wodurch die beiden Verzahnungsabschnitte 54 elastisch verschwenkt werden. Die Außenverzahnungen 541 der Verzahnungsabschnitte 54 werden so außer Eingriff mit der Innenverzahnung 44 des Kopfes 42 der Schraube 4 gebracht. Das Halteelement 5 kann nun in die gewünschte Drehstellung verbracht werden, wobei es über die Rastkörper 521, die den Kopf 42 der Schraube 4 hintergreifen, radial geführt ist. Werden die Hebel 56 losgelassen, so werden die Verzahnungsabschnitte 54 mit ihrer Außenverzahnung 541 durch die Rückstellkräfte der Halter 53 wieder in Eingriff mit der Innenverzahnung 44 des Kopfes 42 der Schraube 4 gebracht, wodurch das Halteelement 5 in der neuen Drehposition an der Schraube 4 fixiert ist.

## Patentansprüche

1. Befestigungsvorrichtung, umfassend eine Schraube (1, 4) mit einem ein Gewinde aufweisenden Schaft (11, 41) und einen an den Schaft angeformten Kopf (12, 42) sowie ein mit dem Kopf (12,42) formschlüssig verbindbares Halteelement (2, 5), das eine Aufnahme zur Befestigung eines Kabels aufweist, wobei der Kopf (12, 42) mit einer Verzahnung (13, 44) versehen ist, die mit einer an dem Halteelement (2, 5) vorhandenen Verzahnung (23, 541) derart korrespondiert, dass eine Drehmomentübertragung von dem Halteelement (2, 5) auf den Schraubenkopf (12, 42) ermöglicht ist, **dadurch gekennzeichnet, dass** der Kopf (12) einen Zylinderkörper aufweist, der radial umlaufend mit einer Außenverzahnung (13) versehen ist, die sich in Axialrichtung über einen Teilbereich des Zylinderkörpers erstreckt, wobei das Halteelement (2) einen Durchbruch (22) aufweist, mit dem es auf den mit der Außenverzahnung (13) versehenen Abschnitt des Kopfes (12) aufschiebbar ist, wobei in dem Durchbruch (22) eine Innenverzahnung (23) angeordnet ist, die mit der Außenverzahnung (13) des Kopfes (12) korrespondiert, wobei an dem Halteelement (2) wenigstens eine Federzunge (24) angeordnet ist, die in montiertem Zustand des Halteelements (2), bei dem Innenverzahnung (23) und Außenverzahnung (13) im Eingriff sind, wenigstens einen Zahn der Außenverzahnung (13) des Kopfes (12) der Schraube (1) hintergreift.

2. Befestigungsvorrichtung nach Anspruch 1, **dadurch gekennzeichnet, dass** die Mittel zur lösbaren Fixierung der im Eingriff befindlichen Verzahnungen (13, 23; 44, 541) von Kopf (12, 42) und Halteelement (2, 5) angeordnet sind.

3. Befestigungsvorrichtung nach Anspruch 1 oder 2, **dadurch gekennzeichnet, dass** wenigstens zwei Federzungen (24) angeordnet sind, die in montiertem Zustand des Halteelements (2), bei dem Innenverzahnung (23) und Außenverzahnung (13) im Eingriff sind, wenigstes einen Zahn der Außenverzahnung (13) des Kopfes (12) der Schraube (1) hintergreifen.

4. Befestigungsvorrichtung nach Anspruch 3, **dadurch gekennzeichnet, dass** die Zähne (131) der Außenverzahnung (13) des Kopfes (12) weitgehend quaderförmig ausgebildet sind, wobei die Zähne (231) der Innenverzahnung (23) des Halteelements (2) vorzugsweise ebenfalls weitgehend quaderförmig ausgebildet sind.

5. Befestigungsvorrichtung nach Anspruch 3 oder 4, **dadurch gekennzeichnet, dass** die Innenkontur des Durchbruchs (22) des Halteelements (2) im Wesentlichen der Außenkontur der Außenverzahnung (13) des Kopfes (12) entspricht, auf den dieser aufschiebbar ist.

6. Befestigungsvorrichtung nach einem der vorgenannten Ansprüche, **dadurch gekennzeichnet, dass** ein Federelement (3) angeordnet ist, über das das Halteelement (2) mit seinen Federzungen (24) gegen die jeweiligen Zähne (131) der Außenverzahnung (13) vorgespannt ist.

7. Befestigungsvorrichtung umfassend eine Schraube (1, 4) mit einem ein Gewinde aufweisenden Schaft (11, 41) und einen an den Schaft angeformten Kopf (12, 42) sowie ein mit dem Kopf (12, 42) formschlüssig verbindbares Halteelement (2, 5), das eine Aufnahme zur Befestigung eines Kabels aufweist, der Kopf (12, 42) mit einer Verzahnung (13, 44) versehen ist, die mit einer an dem Halteelement (2, 5) vorhandenen Verzahnung (23, 541) derart korrespondiert, dass eine Drehmomentübertragung von dem Halteelement (2, 5) auf den Schraubenkopf (12, 42) ermöglicht ist, **dadurch gekennzeichnet, dass** in den Kopf (42) der Schraube (4) zentrisch ein Eingriff (43) eingebracht ist, der eine Innenverzahnung (44) aufweist, wobei das Halteelement (5) wenigstens bereichsweise eine Außenverzahnung (541) aufweist, die mit der Innenverzahnung (44) des Kopfes (42) korrespondiert, wobei die Außenverzahnung (541) durch wenigstens zwei separate Verzahnungsabschnitte (54) gebildet ist, die über einen angeordneten Hebel (56) radial bewegbar sind.

8. Befestigungsvorrichtung nach Anspruch 7, **dadurch gekennzeichnet, dass** zwischen den Zähnen (441) der Innenverzahnung (44) des Kopfes (42) weitgehend quaderförmige Zwischenräume (442) gebildet sind, wobei die Zähne (542) der Außenverzahnung (541) des Halteelements (5) eine weitgehend quaderförmige Kontur aufweisen, die mit den Zwischenräumen (442) der Innenverzahnung (44) des Kopfes (42) korrespondiert.

9. Befestigungsvorrichtung nach Anspruch 7 oder 8, **dadurch gekennzeichnet, dass** das Halteelement (5) hohlzylindrisch ausgebildet ist und einen Innendurchmesser aufweist, der im Wesentlichen dem Außendurchmesser des Kopfes (42) der Schraube (4) entspricht.

10. Befestigungsvorrichtung nach einem der Ansprüche 7 bis 9, **dadurch gekennzeichnet, dass** die Außenverzahnung (541) durch zwei diametral gegenüberliegend angeordnete Verzahnungsabschnitte (54) gebildet ist, die jeweils an einem elastischen Halter (53) angeformt sind, der an der Innenwandung des Halteelements (5) befestigt ist.

11. Befestigungsvorrichtung nach Anspruch 10, **dadurch gekennzeichnet, dass** die beiden elastischen Halter (53) diametral gegenüberliegend angeordnet sind und jeweils mit einem Hebel (56) verbunden sind, der durch jeweils ein in dem Halteelement (5) eingebrachtes Fenster (55) nach außen geführt ist.

12. Befestigungsvorrichtung nach einem der Ansprüche 9 bis 11, **dadurch gekennzeichnet, dass** an dem Halteelement (5) axiale Federlaschen (52) angeformt sind, die jeweils einen radial nach innen kragenden Rastkörper (521) aufweisen, der in montiertem Zustand den Kopf (42) der Schraube (4) hintergreift.

13. Befestigungsvorrichtung nach einem der vorgenannten Ansprüche, **dadurch gekennzeichnet, dass** an dem Halteelement (5) wenigstens eine Aufnahmevorrichtung zur Befestigung von Kabeln oder Rohren angeordnet ist.

14. Befestigungsvorrichtung nach Anspruch 13, **dadurch gekennzeichnet, dass** die Aufnahmevorrichtung mit dem Halteelement (5) formschlüssig und/oder kraftschlüssig verbunden, insbesondere verrastet, verklebt oder verpresst ist.

## Claims

1. Fixing device comprising a screw (1, 4) with a shank (11, 41) having a thread and a head (12, 42) formed on the shank as well as a holding element (2, 5) which can be positively connected to the head (12, 42), which holding element has a receptacle for fixing a cable, wherein the head (12, 42) is provided with a toothing (13, 44), which corresponds with a toothing (23, 541) provided on the holding element (2, 5) in such a manner that a torque transmission from the holding element (2, 5) to the screw head (12, 42) is enabled, **characterised in that** the head (12) has a cylinder body, which is radially circumferentially provided with an external toothing (13), which extends over a partial section of the cylinder body in the axial direction, wherein the holding element (2) has an aperture (22), with which it can be pushed onto the section of the head (12) provided with the external toothing (13), wherein an internal toothing (23) is arranged in the aperture (22), which corresponds with the external toothing (13) of the head (12), wherein at least one spring tongue (24) is arranged on the holding element (2), which, in the mounted state of the holding element (2), in which internal toothing (23) and external toothing (13) are engaged, engages behind at least one tooth of the external toothing (13) of the head (12) of the screw (1).

2. Fixing device according to claim 1, **characterised in that** the means for releasable fixing of the toothings (13, 23; 44, 541) of head (12, 42) and holding element (2, 5) in engagement with one another are arranged.

3. Fixing device according to claim 1 or 2, **characterised in that** at least two spring tongues (24) are arranged, which, in the mounted state of the holding element (2), in which the internal toothing (23) and external toothing (13) are engaged, engage behind at least one tooth of the external toothing (13) of the head (12) of the screw (1).

4. Fixing device according to claim 3, **characterised in that** the teeth (131) of the external toothing (13) of the head (12) are of mostly cuboidal design, wherein the teeth (231) of the internal toothing (23) of the holding element (2) are preferably also of mostly cuboidal design.

5. Fixing device according to claim 3 or 4, **characterised in that** the inner contour of the aperture (22) of the holding element (2) substantially corresponds to the outer contour of the external toothing (13) of the head (12), onto which it can be pushed.

6. Fixing device according to one of the previous claims, **characterised in that** a spring element (3) is arranged, via which the holding element (2) is pretensioned with its spring tongues (24) against the respective teeth (131) of the external toothing (13).

7. Fixing device comprising a screw (1, 4) with a shank (11, 41) having a thread and a head (12, 42) formed on the shank as well as a holding element (2, 5) which can be positively connected to the head (12, 42), which holding element has a receptacle for fixing a cable, the head (12, 42) is provided with a toothing (13, 44), which corresponds with a toothing (23, 541) provided on the holding element (2, 5) in such a manner that a torque transmission from the holding element (2, 5) to the screw head (12, 42) is enabled, **characterised in that** an engagement (43) is centrally inserted into the head (42) of the screw (4), which has an internal toothing (44), wherein the holding element (5) has an external toothing (541) at least in certain regions, which corresponds with the internal toothing (44) of the head (42), wherein the external toothing (541) is formed by at least two separate toothing sections (54), which are radially movable via an arranged lever (56).

8. Fixing device according to claim 7, **characterised in that** mostly cuboidal spaces (442) are formed between the teeth (441) of the internal toothing (44) of the head (42), wherein the teeth (542) of the external toothing (541) of the holding element (5) have a mostly cuboidal contour, which corresponds with the spaces (442) of the inner toothing (44) of the head (42).

9. Fixing device according to claim 7 or 8, **characterised in that** the holding element (5) is hollow-cylindrical in shape and has an inner diameter which substantially corresponds to the outer diameter of the head (42) of the screw (4).

10. Fixing device according to one of claims 7 to 9, **characterised in that** the external toothing (541) is formed by two toothing sections (54) arranged diametrically opposite each other, which are each formed on an elastic holder (53), which is attached to the inner wall of the holding element (5).

11. Fixing device according to claim 10, **characterised in that** the two elastic holders (53) are diametrically oppositely arranged and are each connected to a lever (56), which is guided outwards through a respective window (55) inserted in the holding element (5).

12. Fixing device according to one of claims 9 to 11, **characterised in that** axial spring clips (52) are formed on the holding element (5), which each have a radially inwardly projecting latching body (521), which engages behind the head (42) of the screw (4) in the mounted state.

13. Fixing device according to one of the previous claims, **characterised in that** at least one receiving device for fixing cables or pipes is arranged on the holding element (5).

14. Fixing device according to claim 13, **characterised in that** the receiving device is positively and/or non-positively connected, in particular latched, glued or pressed, to the holding element (5).

## Revendications

1. Dispositif de fixation, comprenant une vis (1, 4) avec une tige (11, 41) qui présente un filet et une tête (12, 42) modelée contre la tige, ainsi qu'un élément de retenue (2, 5) reliable avec la tête (12, 42) par adhérence de formes, élément qui présente un réceptacle pour la fixation d'un câble, sachant que la tête (12, 42) est munie d'une denture (13, 44) épousant une denture (23, 541) présente contre l'élément de retenue (2, 5) de sorte qu'une transmission de couple est rendue possible, de l'élément de retenue (2, 5) vers la tête de vis (12, 42), **caractérisé en ce que** la tête (12) présente un corps cylindrique muni radialement, sur sa périphérie, d'une denture externe (13) qui s'étend dans le sens axial sur une partie du corps cylindrique, sachant que l'élément de retenue (2) présente un orifice de passage (22) permettant de l'enfiler sur le segment de la tête (12) muni de la denture externe (13), sachant que dans l'orifice de passage (22) est disposée une denture interne (23) qui épouse la denture externe (13) de la tête (12), sachant que contre l'élément de retenue (2) est disposée au moins une languette ressort (24) qui, lorsque l'élément de retenue (2) se trouve à l'état monté - état dans lequel la denture interne (23) et la denture externe (13) sont en engrènement -, passe derrière au moins une dent de la denture externe (13) de la tête (12) de la vis (1).

2. Dispositif de fixation selon la revendication 1, **caractérisé en ce que** sont disposés les moyens servant à la fixation détachable des dentures (13, 23 ; 44, 541) - se trouvant en engrènement - de la tête (12, 42) et de l'élément de retenue (2, 5).

3. Dispositif de fixation selon la revendication 1 ou 2, **caractérisé en ce que** sont disposées au moins deux languettes ressorts (24) qui, lorsque l'élément de retenue (2) est à l'état monté - état dans lequel la denture interne (23) et la denture externe (13) sont en engrènement -, passent derrière au moins une dent de la denture externe (13) de la tête (12) de vis (1).

4. Dispositif de fixation selon la revendication 3, **caractérisé en ce que** les dents (131) de la denture externe (13) de la tête (12) sont configurées principalement de forme parallélépipédique, sachant que les dents (231) de la denture interne (23) de l'élément de retenue (2) sont aussi de préférence principalement configurées de forme parallélépipédique.

5. Dispositif de fixation selon la revendication 3 ou 4, **caractérisé en ce que** le contour interne de l'orifice de passage (22) de l'élément de retenue (2) épouse pour l'essentiel le contour extérieur de la denture externe (13) de la tête (12) sur laquelle il est possible de l'enfiler.

6. Dispositif de fixation selon l'une des revendications précédentes, **caractérisé en ce qu'**est disposé un élément ressort (3) via lequel l'élément de retenue (2) est précontraint avec ses languettes ressorts (24) contre les dents respectives (131) de la denture externe (13).

7. Dispositif de fixation comprenant une vis (1, 4) avec une tige (11, 41) présentant un filet et une tête (12, 42) modelée contre la tige, ainsi qu'un élément de retenue (2, 5) reliable avec la tête (12, 42) par adhérence de formes, élément qui présente un réceptacle pour la fixation d'un câble, sachant que la tête (12, 42) est munie d'une denture (13, 44) épousant une denture (23, 541) présente contre l'élément de retenue (2, 5) de sorte qu'est rendue possible une transmission de couple, de l'élément de retenue (2, 5) à la tête de vis (12, 42), **caractérisé en ce qu'**est ménagé centré dans la tête (42) de vis (4) un moyen d'attaque (43) présentant une denture interne (44), sachant que l'élément de retenue (5) présente au moins localement une denture externe (541) qui épouse la denture interne (44) de la tête (42), sachant que la denture externe (541) est formée par au moins deux segments séparés (54) de denture, radialement déplaçables via un levier (56) disposé.

8. Dispositif de fixation selon la revendication 7, **caractérisé en ce qu'**entre les dents (441) de la denture interne (44) de la tête (42) sont formés des espaces interdents (442) principalement parallélépipédiques, sachant que les dents (542) de la denture externe (541) de l'élément de retenue (5) présentent un contour principalement parallélépipédique, contour qui épouse les espaces interdents (442) de la denture interne (44) de la tête (42).

9. Dispositif de fixation selon la revendication 7 ou 8, **caractérisé en ce que** l'élément de retenue (5) est configuré cylindrique creux et présente un diamètre interne correspondant pour l'essentiel au diamètre externe de la tête (42) de la vis (4).

10. Dispositif de fixation selon l'une des revendications 7 à 9, **caractérisé en ce que** la denture externe (541) est formée par deux segments dentés (54) disposés se faisant diamétralement face, qui sont modelés chacun contre un support élastique (53) lui-même fixé contre la paroi interne de l'élément de retenue (5).

11. Dispositif de fixation selon la revendication 10, **caractérisé en ce que** les deux supports élastiques (53) sont disposés se faisant diamétralement face et sont reliés chacun avec un levier (56) qui est guidé vers l'extérieur à travers une fenêtre (55) ménagée dans l'élément de retenue (5).

12. Dispositif de fixation selon l'une des revendications 9 à 11, **caractérisé en ce que** contre l'élément de retenue (5) sont modelées des pattes ressorts (52) axiales présentant chacune un corps de cran (521) faisant radialement saillie vers l'intérieur et qui à l'état monté passe derrière la tête (42) de la vis (4).

13. Dispositif de fixation selon l'une des revendications précédentes, **caractérisé en ce que** contre l'élément de retenue (5) est disposé au moins un dispositif réceptacle servant à fixer des câbles ou des tuyaux.

14. Dispositif de fixation selon la revendication 13, **caractérisé en ce que** le dispositif réceptacle est relié par adhérence de formes et/ou de forces avec l'élément de retenue (5), en particulier qu'il est encranté, collé ou serti.
